# EUROPÄISCHE PATENTSCHRIFT

(11) **EP 2 097 321 B1**
(45) Veröffentlichungstag und Bekanntmachung des Hinweises auf die Patenterteilung: **01.06.2011**
(21) Anmeldenummer: 07819275.4
(22) Anmeldetag: 24.10.2007
(51) Int. Cl.: B65B 9/04, B65B 47/02, B29C 51/42

(54) **VERPACKUNGSMASCHINE MIT EINEM MITTEL ZUM KÜHLEN EINER FOLIENBAHN VOR DEM TIEFZIEHEN**
PACKAGING MACHINE WITH A MEANS FOR COOLING A FILM WEB BEFORE THE DEEP DRAWING PROCESS
MACHINE D'EMBALLAGE PRÉSENTANT DES MOYENS DE REFROIDISSEMENT D'UNE BANDE CONTINUE DE FILM AVANT EMBOUTISSAGE PROFOND

(30) Priorität: 24.10.2006 DE 102006050675
(43) Veröffentlichungstag der Anmeldung: 09.09.2009
(73) Patentinhaber: CFS Germany GmbH, 35216 Biedenkopf-Wallau (DE)
(72) Erfinder: DONGES, Hans Günter, 35080 Bad Endbach (DE); MEYER, Klaus, 35236 Breidenbach (DE)
(74) Vertreter: Wolff, Felix
(86) Internationale Anmeldenummer: PCT/EP2007/009222
(87) Internationale Veröffentlichungsnummer: WO 2008/049596

(56) Entgegenhaltungen:
- EP-A- 0 300 521
- EP-A- 0 539 862
- WO-A-80/01776
- CH-A- 421 497
- FR-A- 1 198 791
- US-A- 4 556 378
- US-A- 4 565 052
- US-A1- 2001 020 594

## Beschreibung

Die vorliegende Erfindung betrifft eine Verpackungsmaschine mit einem Heizmittel, das eine Folienbahn aufheizt, die anschließend mit einem Formwerkzeug tiefgezogen wird.

Die gattungsgemäßen Verpackungsmaschinen sind aus dem Stand der Technik beispielsweise der US-A-4 565 052 und der EP-A-0 539 862 bekannt. Bei diesen Verpackungsmaschinen wird in eine plane Folienbahn eine Mulde durch Tiefziehen eingeformt. Dafür muss die Folienbahn vor dem Tiefziehen mit einem Heizelement erwärmt werden. Beim Tiefziehen wird die Folienbahn unterschiedlich beansprucht. Insbesondere im Bereich von Ecken und im Randbereich wird die Folienbahn wesentlich stärker gedehnt als beispielsweise am Boden der Mulde oder im Bereich der Siegelnaht. Um zu vermeiden, dass die Folie in stark gedehnten Bereichen zu dünn wird, werden dickere Folienbahnen verwendet, was sich nachteilig auf die Kosten, den Transport und die Entsorgung der herzustellenden Verpackung auswirkt.

Es war deshalb die Aufgabe der vorliegenden Erfindung, eine Verpackungsmaschine zur Verfügung zu stellen, die die Nachteile des Standes der Technik nicht aufweist.

Gelöst wird die Aufgabe mit einer Verpackungsmaschine gemäß patentanspruch 1.

Erfindungsgemäß weist die Verpackungsmaschine ein Kühlmittel im Bereich des Heizmittels und/oder im Bereich des Formwerkzeuges auf, mit dem die Folienbahn lokal abgekühlt wird. Die Folie wird demnach während des und/oder nach dem Aufheizen(s) und/oder während des und/oder nach dem Formen(s) lokal gekühlt. Dadurch kann vor und/oder beim Tiefziehen ein gewünschtes Temperaturprofil in der Folienbahn erzielt werden, bevor und/oder während diese tiefgezogen wird. Bereiche die beim Tiefziehen potenziell zu dünn werden, können gezielt gekühlt werden, um ein Wegfließen von Material aus diesen Bereichen zu erschweren. Dies gilt für die Seitenwandbereiche der Verpackung, insbesondere die Ecken der Seitenwände sowie für den Übergang zwischen Seitenwand und Boden.

Im Bereich des Heizmittels und im Bereich des Formwerkzeuges im Sinne der Erfindung bedeutet, dass bei einer Verpackungsmaschine, bei der die Folienbahn taktweise entlang der Verpackungsmaschine transportiert wird, während eines Taktes an der Stelle, an der die Folienbahn aufgeheizt oder verformt wird auch die Kühlung der Folienbahn erfolgt. Bei einer kontinuierlich operierenden Maschine erfolgt die Kühlung an der Stelle an der die Folienbahn auch geheizt und/oder verformt wird.

Durch die lokale Kühlung wird vorzugsweise keine zusätzliche Maschinenlänge benötigt.

Vorzugsweise handelt es sich bei dem Kühlmittel um eine oder mehrere Düsen, die ein Medium, vorzugsweise Luft auf die Folienbahn sprüht oder bläst. Das Medium kann flüssig oder gasförmig sein. Im Fall eines flüssigen Mediums sollte dieses schnell verdunsten, vorzugsweise bevor die hergestellte Verpackungsmulde mit dem Verpackungsgut befüllt wird. Besonders bevorzugt handelt es sich um eine Vielzahl von Düsen, die in einem Rastermaß angeordnet sind und die Wahlweise beispielsweise von einem Computer angesteuert werden können. Dadurch ist es möglich, ein ganz bestimmtes Kühlprogramm zu fahren und bei einem Formatwechsel die jeweils angesteuerten Düsen entsprechend der gewünschten Kühlung zu ändern. Der Computer steuert jedoch nicht nur welche Düsen betrieben werden sondern auch mit welcher Intensität diese betrieben werden. Für jedes Packungsformat, das auf der erfindungsgemäßen Verpackungsmaschine hergestellt wird, kann somit eine optimale Temperaturverteilung hinterlegt und Bedarfsweise abgerufen werden. Diese Temperaturverteilung kann auch noch von dem jeweils zu verarbeitenden Folientyp abhängen. Besonders bevorzugt weist das Tiefziehwerkzeug eine Identifikation, beispielsweise einen Barcode oder einen Transponder, auf. Sobald diese Identifikation in den Computer eingegeben oder automatisch eingelesen wird, wird automatisch das gewünschte Temperaturprofil abgerufen und die Düsen jeweils entsprechend angesteuert.

In einer anderen bevorzugten Ausführungsform ist das Kühlmittel ein gekühlter Stempel. Dieser Kühlstempel weist beispielsweise einen oder mehrere Kühlkanäle auf, die den Kühlstempel gleichmäßig kühlen. Der Kühlstempel kann jedoch auch einen gewünschten Temperaturgradienten aufweisen. Bei einem Formatwechsel wird der Kühlstempel vorzugsweise ebenfalls gewechselt.

In einer anderen bevorzugten Ausführungsform ist das Kühlmittel eine Platte, mit der die Folienbahn zur Kühlung in Kontakt gebracht wird. Diese Platte weist beispielsweise einen oder mehrere Kühlkanäle auf, die die Platte gleichmäßig kühlen. Die Platte kann jedoch auch einen gewünschten Temperaturgradienten aufweisen.

Ganz besonders bevorzugt wirken der gekühlte Stempel und das Kühlmittel zusammen, indem der Stempel die Folie gegen das Kühlmittel drückt.

Weiterhin bevorzugt weist die erfindungsgemäße Verpackungsmaschine Temperaturmessmittel auf, mit dem die Temperaturverteilung in der Folienbahn gemessen wird. Dieses Signal wird ganz besonders bevorzugt dazu herangezogen, das Kühlmittel so zu steuern, dass in der Folie vor dem Tiefziehen die gewünschte Temperaturverteilung erzielt wird.

Vorzugsweise weist auch die Heizplatte einen Temperaturgradienten auf, so dass die Folie bereits während des oder nach dem Heizen(s) keine gleichförmige Temperatur sondern einen Temperaturgradienten aufweist. In diesem Zusammenhang wird auf die Parallelanmeldung mit dem internen Aktenzeichen CI0346 verwiesen, die hiermit als Referenz eingeführt wird, und somit als Teil der Offenbarung gilt.

Im Folgenden wird die vorliegende Erfindung anhand der Figuren 1 bis 5 erläutert. Diese Erläuterungen sind lediglich beispielhaft und schränken den allgemeinen Erfindungsgedanken nicht ein.
**Figur 1** zeigt schematisch die erfindungsgemäße Verpackungsmaschine.
**Figur 2** zeigt Düsen als Kühlmittel.
**Figur 3** zeigt einen Stempel als Kühlmittel.
**Figur 4** zeigt einen Stempel als Kühlmittel, der mit einer Kühlplatte zusammenwirkt.
**Figur 5** zeigt die Ausführungsform gemäß Figur 2 in Draufsicht.

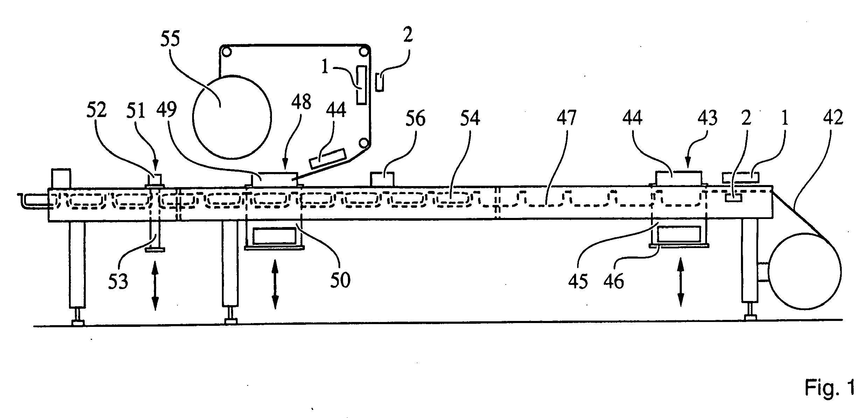

**Figur 1** zeigt eine schematische Darstellung einer möglichen Ausführungsform der erfindungsgemäßen Verpackungsmaschine. Eine Unterfolie 42 wird von einer Rolle abgerollt und zunächst mit einem Heizelement 1 erwärmt. Anschließend oder gleichzeitig wird die Unterfolie durch das Kühlmittel 2 lokal gekühlt, so dass in der Unterfolie ein Temperaturgradient entsteht. Nachfolgend wird die Unterfolie in einer Formstation 43 tiefgezogen. Diese Formstation 43 weist ein Oberwerkzeug 44 und ein Unterwerkzeug 45, das auf einer Auflage 46 angeordnet ist, auf. Wie durch den Doppelpfeil dargestellt, ist die Auflage 46 und damit das Unterwerkzeug 45 vertikal verschiebbar. Sobald die Verpackungsmulden 3 in die Unterfolienbahn 42 eingeformt sind, werden sie mit dem Verpackungsgut 54 befüllt. Anschließend bevor die Verpackungsmulden in die Siegelstation 48 gelangen, werden mittels einer Stanze 56 Löcher in die Unterfolie gestanzt, die für den Gasaustausch in der Verpackung innerhalb der Siegelstation benötigt werden. In der Siegelstation 48 wird eine Oberfolie 55 auf die Unterfolie 42 gesiegelt und somit die Verpackungen geschlossen. In dem vorliegenden Fall wird auch die Oberfolie mittels eines Heizelementes 1 aufgewärmt. Anschließend oder gleichzeitig wird die Oberfolie 55 durch das Kühlmittel 2 lokal gekühlt, so dass in der Oberfolie ein Temperaturgradient entsteht und anschließend mittels des Tiefziehwerkzeuges 44 tiefgezogen. Diese Tiefziehung kann dazu dienen, einen gewölbten Deckel für die Verpackungen zur Verfügung zu stellen. Die Tiefziehung kann jedoch auch dazu dienen die Oberfolie schrumpffähig zu machen. Auch die Siegelstation weist ein Oberwerkzeug 49 und ein Unterwerkzeug 50 auf, die beim Siegeln gegeneinander gepresst werden. In dem Oberwerkzeug 49 befindet sich ein Siegelrahmen, der ebenfalls mittels eines Heizelementes beheizt wird. Die nunmehr geschlossenen Verpackungen werden abschließend in einer Schneidstation 51 vereinzelt. Die Querschneidung der Schneidstation weist ebenfalls ein Oberwerkzeug 52 und ein Unterwerkzeug 53 auf, wobei das Unterwerkzeug 53 wiederum vertikal verschiebbar ist. Der Fachmann versteht, dass auch die Formstation, eine Kühlung aufweisen kann.

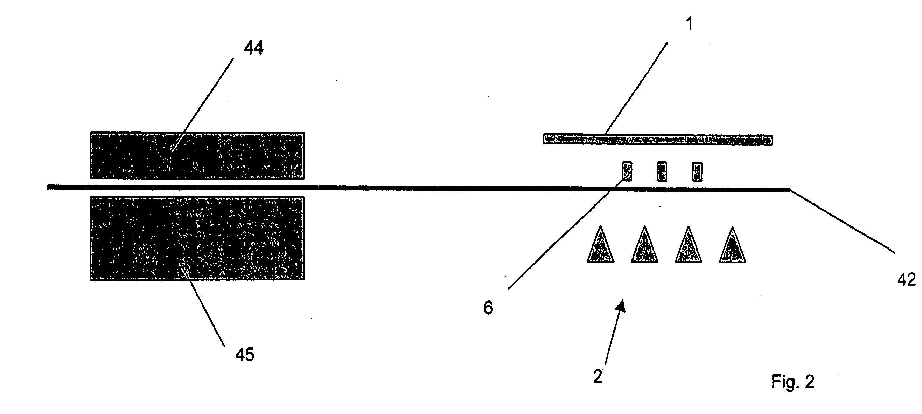

**Figur 2** zeigt eine mögliche Ausführungsform des Kühlmittels, das im Berich des Heizmittels 1 oder im Bereich der Formstation 43 angeordnet ist. In dem vorliegenden Fall handelt es sich bei dem Kühlmittel um Düsen, die Luft von unten oder oben gegen die Folienbahn 42 blasen und diese somit lokal kühlen. Im Bereich der Kühlung weist die erfindungsgemäße Verpackungsmaschine Thermoelemente 6 auf, die die Temperaturverteilung in der Folienbahn 42 messen. Das Signal dieser Thermoelemente wird zur Steuerung der Düsen verwendet. Beispielsweise werden die Düsen abhängig von einer gemessenen Ist-Temperatur und einer gewünschten Soll-Temperatur in ihrer Intensität gesteigert oder reduziert. Um zu erreichen, dass die Folienbahn am Ende eines Taktes die gewünschte Temperaturverteilung aufweist.

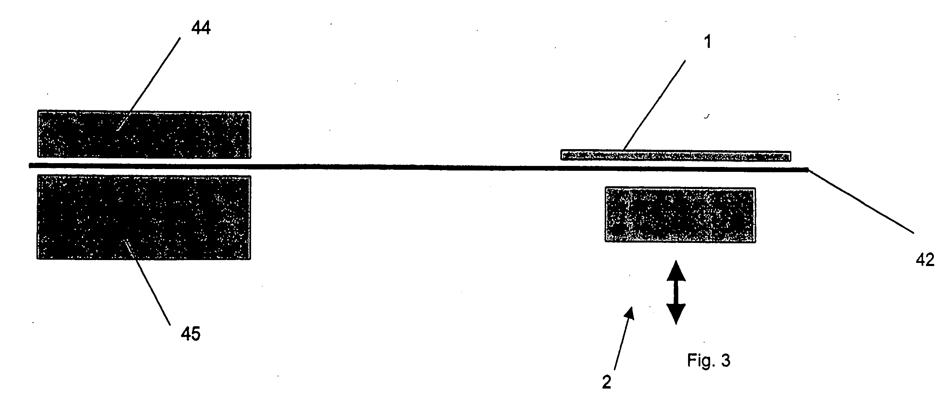

**Figur 3** zeigt die Vorrichtung gemäß Figur 2, wobei in dem vorliegenden Fall das Kühlmittel 2 ein Stempel ist, der, wie durch den Doppelpfeil dargestellt ist, vertikal verschiebbar angeordnet ist. Zur Kühlung der Folienbahn 42, 55 wird dieser Stempel in Kontakt mit der Folienbahn gebracht. Sobald die gewünschte Temperaturverteilung in der Folienbahn erzielt worden ist, wird der Stempel 2 wieder von der Folienbahn entfernt.

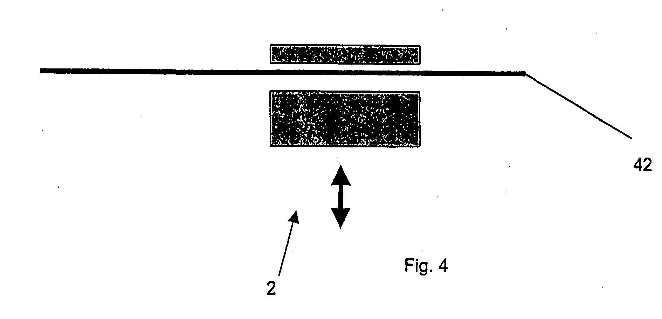

**Figur 4** zeigt die Ausführungsform der erfindungsgemäßen Verpackungsmaschine gemäß Figur 3, wobei die Verpackungsmaschine in dem vorliegenden Fall noch eine Kühlplatte aufweist. Der Stempel drückt die Folienbahn gegen die Kühlplatte, so dass diese an der Kühlplatte und gegebenenfalls zusätzlich auch von dem Stempel gekühlt wird um die gewünschte Temperaturverteilung innerhalb der Folienbahn 42 zu erzielen. Die Kühlplatte kann mehrere Kühlkanäle aufweisen, die individuell ansteuerbar sind, um die gewünschte Temperaturverteilung in der Folienbahn zu erzielen. Die Kühlplatte und der Stempel können im Bereich des Heizmittels 1 und/oder im Bereich des Formwerkzeug angeordnet sein.

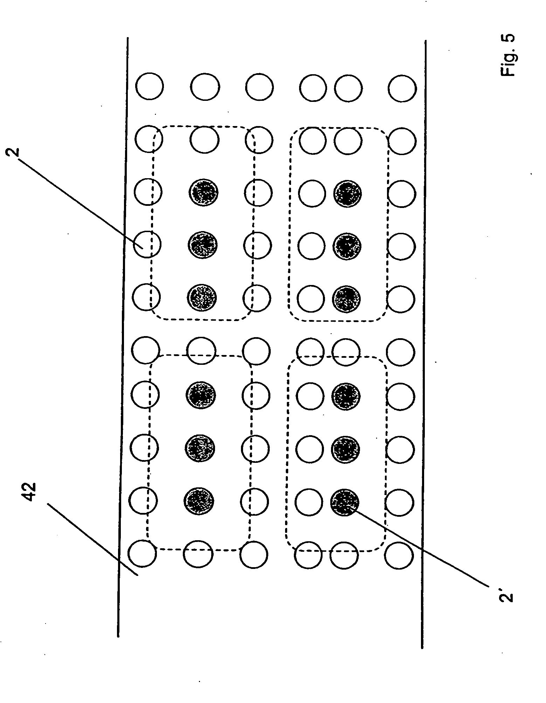

**Figur 5** zeigt die Kühlung der erfindungsgemäßen Verpackungsmaschine gemäß Figur 2 in einer Draufsicht. In dieser Ansicht ist zu erkennen, dass die Kühlung 2 aus einer Vielzahl von Düsen besteht, die in einem Raster angeordnet sind. Jede Düse ist einzeln von einem Computer steuerbar, so dass sie einzeln betreibbar und jeweils ihre Intensität unterschiedlich eingestellt werden kann. In dem vorliegenden Fall sind lediglich die weißhinterlegten Düsen 2 in Betrieb, um die Folienbahn 42 in diesem Bereich zu kühlen. Die später in der Formstation herzustellenden Verpackungsmulden sind durch die gestrichelten Linien schematisch dargestellt. Es ist demnach zu erkennen, dass in dem vorliegenden Fall lediglich der Randbereich der herzustellenden Verpackungsmulde gekühlt wird.

### Bezugszeichenliste

- 1: Heizelement
- 2,2': Kühlmittel, Düsen, Stempel, Kühlplatte
- 3: Verpackungsmulde
- 4: Verpackungsmaschine
- 5: Siegelrahmen
- 6: Temperaturmessmittel, Thermoelement
- 7: Kühlplatt
- 42: Unterfolienbahn
- 43: Formstation
- 44: Oberwerkzeug der Formstation
- 45: Unterwerkzeug der Formstation
- 46: Auflage des Unterwerkzeuges der Formstation
- 48: Siegelstation
- 49: Oberwerkzeug der Siegelstation
- 50: Unterwerkzeug der Siegelstation
- 51: Schneidstation
- 52: Oberwerkzeug der Schneidstation
- 53: Unterwerkzeug der Schneidstation
- 54: Verpackungsgut
- 55: Oberfolie
- 56: Stanzen

## Patentansprüche

1. Verpackungsmaschine mit einem Heizmittel (1), mit dem eine Folienbahn (42, 55) aufheizbar ist, die anschließend mit einem Formwerkzeug (44) tiefziehbar ist, wobei im Bereich Heizmittel (1) und/oder im Bereich des Formwerkzeugs (44) ein Kühlmittel (2) angeordnet ist, mit dem die Folienbahn (42, 55) lokal so abkühlbar ist, dass Bereiche, die beim Tiefziehen potentiell zu dünn werden gezielt kühlbar sind, um ein Wegfließen des Materials aus diesen Bereichen zu erschweren, **dadurch gekennzeichnet, dass** es sich bei den Bereichen um den Seitenwandbereich der Verpackung, insbesondere die Ecken der Seitenwände sowie den Übergang zwischen Seitenwand und Boden handelt.

2. Verpackungsmaschine nach Anspruch 1, **dadurch gekennzeichnet, dass** das Kühlmittel eine Düse ist, die ein Medium auf die Folienbahn (42, 55) sprüht oder bläst.

3. Verpackungsmaschine nach Anspruch 2, **dadurch gekennzeichnet, dass** das Medium ein Gas, insbesondere Luft ist.

4. Verpackungsmaschine nach einem der voranstehenden Ansprüche, **dadurch gekennzeichnet, dass** das Kühlmittel ein vorzugsweise gekühlter Stempel ist.

5. Verpackungsmaschine nach einem der voranstehenden Ansprüche, **dadurch gekennzeichnet, dass** das Kühlmittel eine Platte ist, mit der die Folienbahn in Kontakt gebracht wird.

6. Verpackungsmaschine nach einem der voranstehenden Ansprüche, **dadurch gekennzeichnet, dass** sie Temperaturmessmittel (6) aufweist.

7. Verpackungsmaschine nach einem der voranstehenden Ansprüche, **dadurch gekennzeichnet, dass** die Heizplatte einen Temperaturgradienten aufweist.

## Claims

1. Packaging machine having a heating means (1) with which a film web (42, 55) can be heated and subsequently can be deep-drawn with a moulding tool (44), there being arranged in the region of the heating means (1) and/or in the region of the moulding tool (44) a cooling means (2), with which the film web (42, 55) can be cooled locally such that regions which potentially become too thin duping deep-drawing can be cooled in a targeted manner in order to make it more difficult for the material to flow away out of these regions, **characterized in that** the regions are the side-wall region of the packaging, in particular the corners of the side walls and the transition between side wall and bottom.

2. Packaging machine according to Claim 1, **characterized in that** the cooling means is a nozzle which sprays or blasts a medium onto the film web (42, 55).

3. Packaging machine according to Claim 2, **characterized in that** the medium is a gas, in particular air.

4. Packaging machine according to one of the preceding claims, **characterized in that** the cooling means is a preferably cooled stamp.

5. Packaging machine according to one of the preceding claims, **characterized in that** the cooling means is a plate with which the film web is brought into contact.

6. Packaging machine according to one of the preceding claims, **characterized in that** it has temperature-measuring means (6).

7. Packaging machine according to one of the preceding claims, **characterized in that** the heating plate has a temperature gradient.

## Revendications

1. Machine d'emballage comprenant un moyen de chauffage (1), avec lequel une bande de film (42, 55) peut être chauffée, laquelle peut ensuite être thermoformée avec un outil de formage (44), un moyen de refroidissement (2) étant disposé dans la région du moyen de chauffage (1) et/ou dans la région de l'outil de formage (44), avec lequel moyen de refroidissement la bande de film (42, 55) peut être refroidie localement de telle sorte que des régions qui, lors du thermoformage, peuvent devenir trop minces, puissent être refroidies de manière ciblée, afin de rendre plus difficile un écoulement de matière hors de ces régions, **caractérisée en ce que** les régions sont la région de paroi latérale de l'emballage, en particulier les coins des parois latérales, ainsi que la transition entre la paroi latérale et le fond.

2. Machine d'emballage selon la revendication 1, **caractérisée en ce que** le moyen de refroidissement est une buse qui pulvérise ou souffle un milieu sur la bande de film (42, 55).

3. Machine d'emballage selon la revendication 2, **caractérisée en ce que** le milieu est un gaz, notamment de l'air.

4. Machine d'emballage selon l'une quelconque des revendications précédentes, **caractérisée en ce que** la moyen de refroidissement est une matrice de préférence refroidie.

5. Machine d'emballage selon l'une quelconque des revendications précédentes, **caractérisée en ce que** le moyen de refroidissement est une plaque au contact de laquelle est amenée la bande de film.

6. Machine d'emballage selon l'une quelconque des revendications précédentes, **caractérisée en ce qu'**elle présente des moyens de mesure de la température (6).

7. Machine d'emballage selon l'une quelconque des revendications précédentes, **caractérisée en ce que** la plaque chauffante présente un gradient de température.
